# EUROPEAN PATENT SPECIFICATION

(11) **EP 2 234 376 B1**
(45) Date of publication and mention of the grant of the patent: **27.04.2011**
(21) Application number: 09156523.4
(22) Date of filing: 27.03.2009
(51) Int. Cl.: H04M 1/02

(54) **Battery cover and latch assembly for a portable electronic device**
Batterieabdeckung und Laschenanordnung für eine tragbare elektronische Vorrichtung
Couvercle de batterie et ensemble de loquet pour dispositif électronique portable

(43) Date of publication of application: 29.09.2010
(73) Proprietor: RESEARCH IN MOTION LIMITED, Waterloo, Ontario N2L 3W8 (CA)
(72) Inventor: Rajagopal, Vijai, Waterloo Ontario N2L 3W8 (CA); Kyowski, Timothy Herbert, Waterloo Ontario N2L 3W8 (CA); Infanti, James Carl, Waterloo Ontario N2L 3W8 (CA)
(74) Representative: Roberts, Gwilym Vaughan

(56) References cited:
- US-A- 5 213 913
- US-A1- 2004 203 518
- US-A1- 2006 292 439
- US-A1- 2007 218 961
- US-A1- 2008 318 646
- US-B1- 6 168 881
- US-B1- 6 730 432

## Description

### Background of the Disclosure

### 1. Field of the Disclosure

The present disclosure relates to portable electronic devices, including, but not limited, to handheld wireless communication devices; and more particularly to a cover by which a user gains access to a battery compartment in such a device.

### 2. Description of the Related Art

Certain portable electronic devices, handheld wireless communication devices in particular, are battery powered. The device typically has a metal or plastic housing defining a compartment for the battery. A cover releasably engages the housing to enable the user to access the battery for replacement. In conventional devices, the cover is generally closed by sliding it along a recessed opening of the battery compartment. As that sliding occurs, hook shaped tabs on the cover engage apertures in the housing and then travel into smaller sections of the apertures in which the hooks are captivated. Such captivation holds the cover on the housing.

Sliding the cover in the opposite direction moves the hooks into the larger sections of the apertures enabling the cover to be moved away from the housing. In that manner, the cover can be removed to open the battery compartment.

Because the cover must be secured tightly to the housing, some users find it physically challenging to slide the cover of conventional devices off and on the housing.
US 2004/0203518 relates to an enclosure assembly for a portable electronic device requiring the user to use two pointed objects to disengage the cover from the housing.

### Brief Description of the Drawings

FIGURE 1 is a perspective view of a rear side of a portable electronic device showing the cover over a battery compartment defined in a housing;

FIGURE 2 illustrates the inside major surface of the cover showing latch assemblies for holding the cover on the housing;

FIGURE 3 is an enlarged view of one of the latch assemblies with a cap removed;

FIGURE 4 is a partial cross sectional view depicting engagement of a latch assembly with the housing;

FIGURE 5 shows the cover partially removed from the housing; and

FIGURE 6 illustrates details of a ground spring on the housing in Figure 5.

### Detailed Description

A portable electronic device has a housing with a battery compartment that is closed by a cover. The cover has at least one and preferably two spring-loaded latch assemblies that are slideably located along opposite edges of the cover. In the normal positions, tabs on the latch assemblies extend under receiving surfaces on the housing to hold the cover in place.

The user is able to simultaneously slide the two latch assemblies from their normal positions and thereby retract the tabs from engagement with the receiving surfaces. This permits the cover to be pivoted outward and removed from the housing, thereby exposing the battery compartment.

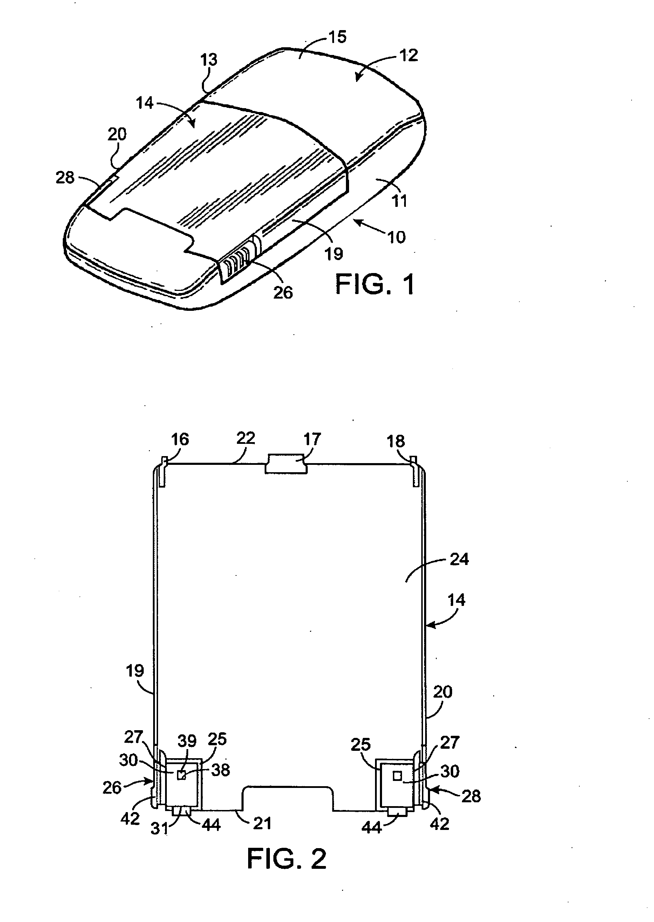

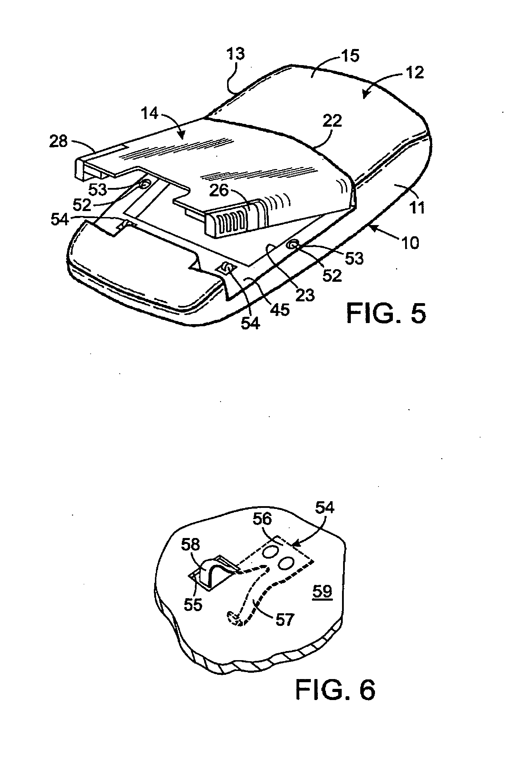

With initial reference to Figure 1, a portable electronic device 10 is provided, such as a handheld wireless communication device, and includes a housing 12 with a cover 14. The cover 14 preferably is made of metal, while the housing may be either metal or molded plastic, although it is contemplated that alternative materials with similar properties may be appropriate. The cover 14 is removably secured over a battery compartment or opening 23 (FIG. 5) defined in the housing 12. Specifically the cover 14 fits into a recess 45 defined in the housing 12 that surrounds the battery compartment, thus when in place, the cover is flush with the exterior surfaces of the housing. The cover extends across a rear surface 15 of the housing wrapping around onto two side surfaces 11 and 13. First and second latch assemblies 26 and 28 are slideably located along opposite edges of the cover 14 and engage the housing to secure the cover in place.

With additional reference to Figure 2, the cover 14 has first and second edges 19 and 20 spaced apart and extending along the length of the cover. Third and fourth edges 21 and 22 extend between the first and second edges 19 and 20 on opposite sides of the cover. A set of three fixed tabs 16, 17 and 18 project from the fourth edge 22 which extends across the width of the housing 12 when the cover is in place. The first and third fixed tabs 16 and 18 are adjacent the first and second edges 19 and 20 of the cover 14 and the second fixed tab 17 is located substantially at the middle of the fourth edge 22, although it is appreciated that the tabs 16-18 are not limited to the above-described orientation. The fixed tabs 16-18 project outward from the cover's major inside surface 24 and engage corresponding receptacles (not shown) defined in the housing 12 to hold the fourth edge 22 in place. A lesser or greater number of fixed tabs may be provided as required to hold the fourth edge in place.

A releasable first latch assembly 26 is located on the inside surface 24 of the cover 14 along the first edge 19 at a corner with the third edge 21. A releasable second latch assembly 28 is similarly located along the second edge 20 at an opposing corner with the third edge 21. As will be described, these latch assemblies 26, 28 also engage the housing 12 to hold the cover 14 in place. Each of the first and second latch assemblies 26 and 28 can be manually operated to disengage the housing 12 and enable removal of the cover 14.

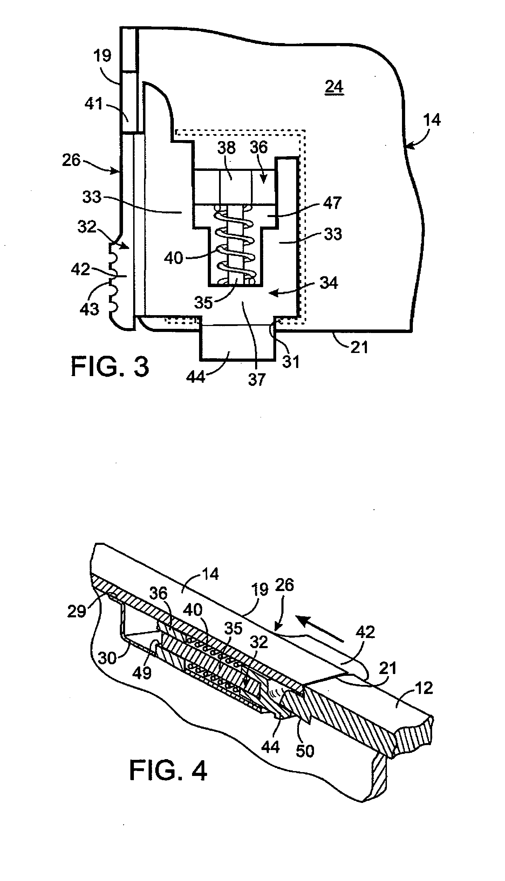

Each latch assembly 26 and 28 has a cap 30 which is bonded to the inside surface 24 of the cover 14 by a suitable means, such as welding or an adhesive. Although alternative configurations may be appropriate, the cap 30 is preferably a rectangular polyhedron with a first open side 29 (FIG. 4)against the inside cover surface 24 and a second open side 27facing the respective cover edge. Other sides of the cap 30 define apertures into which other components of the latch assembly extend, as will be described. The cap 30 has a flange 25 extending around the first open side and abutting the inside cover surface 24 to aid in fastening those components together.

The first and second latch assemblies 26 and 28 have identical construction, but are mirror images of each other. Therefore, the details of the first latch assembly 26 will be described with the understanding that the description applies equally as well to the second latch assembly 28. Figure 3 illustrates details of the first latch assembly 26 with the cap 30 removed, however the outline of a cap wall is depicted by a dashed line. The first latch assembly 26 comprises a movable latch 32 that is slideably received within the cap 30 so as to move against the inside surface 24 of the cover 14. When in place, the cap guides the sliding motion of the latch 32. The latch 32 has a U-shaped central portion 34 formed by a pair of parallel legs 33 with a cross leg 37 there between and facing the fourth cover edge 22. A guide pin 35 extends from the cross leg 37 and through an open interior 47 of the U-shaped central portion 34. The guide pin 35 is slideably received in a guide aperture 49 (Figure. 4) defined in a stop block 36 located within the open interior. One surface of the stop block 36 has a boss 38, that in the assembled latch assembly projects into a first aperture 39 in the cap 30 (see Figure 2). This engagement locates the stop block 36 which is fastened by welding, adhesive, or similar means to the inside surface of the cap 30 thereby holding the stop block in a fixed position as the latch 32 slides. The guide pin 35 extends through a coil-type, compression spring 40, that abuts the latch cross leg 37 and the stop block 36. The spring 40 biases the latch 32 away from the stop block 36, thereby providing a force that pushes the latch 32 toward the third edge 21 of the cover 14 and against an adjacent side wall of the cap 30. In this position, a tab 44, projecting from the latch's central portion 34, extends outward through a second aperture 31 defined in the wall of the cap 30 that faces the third edge 21 (see also Figure 2).

The latch 32 further includes a manual actuator 42 that is contiguous with one leg 33 of the central portion 34 and projects through the second open side 27 of the cap 30 and through a notch 41 defined in the first edge 19 of the cover 14. The manual actuator 42 has a surface 43 for the finger of a person to engage. Preferably, the surface 43 includes texture such as ridges or ribbing, enabling the user to easily operate the actuator 42. This enables the person using the portable electronic device 10 to apply force to the manual actuator 42 that causes the latch 32 to slide along the cover's inside surface 24 against the bias force of spring 40 and away from the cover's third edge 21.

The above-described sliding motion releases the latch 32 from engagement with the housing 12 of the portable electronic device 10 and enables removal of the cover 14. Referring to Figure 4, when the cover 14 is secured in place on the housing 12, the spring 40 biases the latch 32 into a first position at which the tab 44 slides under and into engagement with a catch surface 50 on the interior of the housing. Both the catch surface 50 and a mating surface on the tab 44 are similarly tapered to provide tight engagement between those two components when the latch 32 is so biased. Those tapered surfaces also minimize friction when the tab 44 moves out of engagement with the catch surface 50. When a user of the portable electronic device applies a finger to the actuator 42 and slides the latch along the first cover edge 19 toward the upper left as indicated by the arrow in Figure 4, the tab 44 is retracted into the cap 30 and disengages the catch surface 50. In this second position of both latches 32, the cover 14 can be pivoted upward and away from the recess in the housing 12, as shown in Figure 5. From the pivoted position, the cover 14 can be pulled completed out of the recess 45 of the housing, and the battery (not shown), can be removed from the battery compartment 23. The first and second latch assemblies 26 and 28 consume minimal volume inside the cover as compared to other latch designs.

With continuing reference to Figure 5, the housing 12 further includes a pair of spring-loaded pogo pins 52 located in apertures 53 on opposite sides of the housing recess 45. The pogo pins 52 are electrically conductive and provide connections between a conductive portion of the housing 12 and either the metal cover 14 or an electrically conductive material applied to the interior surface of a plastic cover. The housing 12 also includes two ground springs 54 protruding through apertures in a wall 59 within the housing recess 45 to engage the inside surface of the cover 14 when the cover is fastened in place.

Figure 6 depicts the details of each ground spring 54 which comprises a base portion 56 that is secured to an interior surface of the housing recess 45 and from which project first and second leaf arms 57 and 58. The first leaf arm 57 projects downward into the interior of the housing recess 45 for engagement by a ground conductor on a printed circuit board or other component of the portable electronic device (not shown). The second leaf arm 58 projects upward through an opening 55 in the housing recess 45 so as to engage the interior surface of the cover 14 when secured on the housing.

The ground spring 54 provides an electrical path between the ground conductor on the printed circuit board and the cover 14. Each pogo pin 52 and each ground spring 54 functions as an electrical contact that engages the cover 14 upon being secured to the housing 12 and provides an electrical connection between the housing 12 and the cover for electrical shielding purposes. The pogo pins 52 and ground springs 54 also aid in pivoting the cover 14 away from the housing 12 when the latch assemblies 26 and 28 are released, thereby assisting in the removal of the cover. Therefore, the pogo pins and each ground springs still could be used for a cover that was not electrically conductive.

The foregoing description was primarily directed to a preferred embodiment of the present latch assembly. Although some attention was given to various alternatives within the scope of the disclosure, it is anticipated that one skilled in the art will likely realize additional alternatives that are now apparent from disclosure of embodiments of the present latch assembly. Accordingly, the scope of the disclosure should be determined from the following claims and not limited by the above disclosure.

## Claims

1. An apparatus for securing a cover (14) over an opening (23) defined in a housing (12) of a portable electronic device, (10) wherein the cover (14) has opposing first (19) and second (20) edges between which third (21) and fourth (22) edges extend, said apparatus comprising:
a first latch assembly (26) affixed to the cover (14) and having a first latch (32) that is moveable along the first edge (19) into and out of engagement with the housing (12), and a first biasing member (40) arranged to bias the first latch (32) into engagement with the housing (12); and
a second latch assembly (28) affixed to the cover (14) and having a second latch (32) that is moveable along the second edge (20) into and out of engagement with the housing (12), and a second biasing member (40) arranged to bias the second latch (32) into engagement with the housing (12).

2. The apparatus as recited in claim 1 further comprising a first cap (30) secured to the cover (14) and partially enclosing the first latch assembly (26); and a second cap (30) secured to the cover (14) and partially enclosing the second latch assembly (28); preferably wherein the first biasing member (40) comprises a first spring biasing the first latch (32) outward from the first cap (30); and the second biasing member (40) comprises a second spring biasing the second latch (32) outward from the second cap (30).

3. The apparatus as recited in claim 1 wherein each of the first and second latches (32) has a tab (44) projecting there from for engaging a respective catch (50) on the housing (12), and preferably wherein the tab (44) of each of the first and second latches (32) projects toward the third edge (21).

4. The apparatus as recited in claim 1 wherein each of the first and second latches (32) comprises a central portion (34); a tab (44) projecting from the central portion (34) for engaging a catch (50) on the housing (12); and a user actuator (42) projecting from the central portion (34) toward the first (19) or second (20) edge along which the respective latch (32) is moveable.

5. The apparatus as recited in claim 1 wherein each of the first and second latches (32) comprises:
a U-shaped central portion (34) having a pair of spaced apart legs (33) with a cross leg (37) extending there between;
a guide pin (35) projecting from the cross leg (37) and between the pair of spaced apart legs (33); and
a tab (44) projecting from the cross leg (37) for engaging a respective catch (50) on the housing (12).

6. The apparatus as recited in claim 5 wherein each of the first and second biasing members (40) comprises a compression spring through which extends the guide pin (35) of the respective one of the first and second latches. (32), and preferably wherein each of the first (26) and second (28) latch assemblies further comprises a stop block (36) abutting the respective compression spring (40) and a cap (30) secured to the cover (14) and having the stop block (36) affixed thereto.

7. The apparatus as recited in claim 1 wherein each of the first and second latches (32) comprises a user actuator (42) accessible from outside the portable electronic device (10) for moving the latches (32) out of engagement with the housing (12).

8. The apparatus as recited in claim 7 wherein the housing (12) has first and second catches (50), and preferably wherein the latches (32) are slideable or each biasing member (40) is arranged to bias the respective latch (32) into engagement with a respective catch (50).

9. The apparatus as recited in claim 1 further comprising a fixed tab (16-18) secured to the cover (14) for engaging a receptacle on the housing (12).

10. The apparatus as recited in claim 9 wherein said fixed tab (16-18) projects outward from the fourth edge (22) of the cover (14)

11. The apparatus as recited in claim 9 further comprising a spring biased electrical contact (54) on the housing (12) and engaging the cover (14) that is secured to the housing (12).

## Patentansprüche

1. Vorrichtung zum sicheren Befestigen einer Abdeckung (14) über einer Öffnung (23), die in einem Gehäuse (12) einer tragbaren elektronischen Vorrichtung (10) definiert ist, wobei die Abdeckung (14) gegenüberliegende erste (19) und zweite (20) Kanten hat, zwischen denen sich dritte (21) und vierte (22) Kanten erstrecken, wobei die Vorrichtung aufweist:
eine erste Verriegelungsbaugruppe (26), die an der Abdeckung (14) angebracht ist und eine erste Verriegelung (32) hat, die entlang der ersten Kante (19) in einen und aus einem Eingriff mit dem Gehäuse (12) bewegbar ist, und ein erstes Biasing-Element (40), das ausgebildet ist, die erste Verriegelung (32) in Eingriff mit dem Gehäuse (12) zu bringen; und
eine zweite Verriegelungsbaugruppe (28), die an der Abdeckung (14) angebracht ist und eine zweite Verriegelung (32) hat, die entlang der zweiten Kante (20) in einen und aus einem Eingriff mit dem Gehäuse (12) bewegbar ist, und ein zweites Biasing-Element (40), das ausgebildet ist, die zweite Verriegelung (32) in Eingriff mit dem Gehäuse (12) zu bringen.

2. Vorrichtung gemäß Anspruch 1, die weiter aufweist eine erste Kappe (30), die an der Abdeckung (14) befestigt ist und die erste Verriegelungsbaugruppe (26) teilweise umgibt; und eine zweite Kappe (30), die an der Abdeckung (14) befestigt ist und die zweite Verriegelungsbaugruppe (28) teilweise umgibt; wobei vorzugsweise das erste Biasing-Element (40) eine erste Feder aufweist, die die erste Verriegelung (32) von der ersten Kappe (30) nach außen drückt; und das zweite Bias- Element (40) eine zweite Feder aufweist, die die zweite Verriegelung (32) von der zweiten Kappe (30) nach außen drückt.

3. Vorrichtung gemäß Anspruch 1, wobei jede der ersten und zweiten Verriegelungen (32) eine daraus hervorstehende Lasche (44) hat zum Eingreifen in eine jeweilige Einrastung (50) an dem Gehäuse (12), und wobei sich vorzugsweise die Lasche (44) von jeder der ersten und zweiten Verriegelungen (32) in Richtung zu der dritten Kante (21) hin erstreckt.

4. Vorrichtung gemäß in Anspruch 1, wobei jede der ersten und zweiten Verriegelungen (32) einen zentralen Abschnitt (34) aufweist; eine Lasche (44), die aus dem zentralen Abschnitt (34) hervorsteht zum Eingreifen in eine Einrastung (50) an dem Gehäuse (12); und einen Benutzeraktuator (42), der von dem zentralen Abschnitt (34) hin zu der ersten (19) oder zweiten (20) Kante hervorsteht, entlang der die jeweilige Verriegelung (32) bewegbar ist.

5. Vorrichtung gemäß Anspruch 1, wobei jede der ersten und zweiten Verriegelungen (32) aufweist:
einen U-förmigen zentralen Abschnitt (34), der ein Paar von beabstandeten Schenkeln (33) mit einem Querschenkel (37) hat, der sich dazwischen erstreckt;
einen Führungsstift (35), der aus dem Querschenkel (37) und zwischen dem Paar der beabstandeten Schenkel (33) hervorsteht; und
eine Lasche (44), die von dem Querschenkel (37) hervorsteht zum Eingreifen in eine jeweilige Einrastung (50) an dem Gehäuse (12).

6. Vorrichtung gemäß Anspruch 5, wobei jedes der ersten und zweiten Biasing-Elemente (40) eine Kompressionsfeder aufweist, durch die sich der Führungsstift (35) der jeweiligen der ersten und zweiten Verriegelungen (32) erstreckt, und wobei vorzugsweise jede der ersten (26) und zweiten (28) Verriegelungsbaugruppen weiter einen Anschlagsblock (36) aufweist, der an die jeweilige Kompressionsfeder (40) angrenzt, und eine Kappe (30), die an der Abdeckung (14) befestigt ist und den Anschlagsblock (36) daran befestigt hat.

7. Vorrichtung gemäß Anspruch 1, wobei jede der ersten und zweiten Verriegelungen (32) einen Benutzeraktuator (42) aufweist, der von außerhalb der tragbaren elektronischen Vorrichtung (10) zugänglich ist, zum Bewegen der Verriegelungen (32) aus einem Eingriff mit dem Gehäuse (12) heraus.

8. Vorrichtung gemäß Anspruch 7, wobei das Gehäuse (12) erste und zweite Einrastungen (50) hat, und wobei vorzugsweise die Verriegelungen (32) verschiebbar sind oder jedes Bias- Element (40) ausgebildet ist, die jeweilige Verriegelung (32) in Eingriff mit einer jeweiligen Einrastung (50) zu bringen.

9. Vorrichtung gemäß Anspruch 1, die weiter eine feste Lasche (16-18) aufweist, die an der Abdeckung (14) befestigt ist, zum Eingreifen in eine Fassung an dem Gehäuse (12).

10. Vorrichtung gemäß Anspruch 9, wobei die feste Lasche (16-18) von der vierten Kante (22) der Abdeckung (14) hervorsteht.

11. Vorrichtung gemäß Anspruch 9, die weiter einen Feder-gespannten elektrischen Kontakt (54) an dem Gehäuse (12) aufweist, der die Abdeckung (14) in Eingriff bringt, die an dem Gehäuse (12) befestigt wird.

## Revendications

1. Appareil pour fixer un capot (14) sur une ouverture (23) définie dans un boîtier (12) d'un dispositif électronique portable (10), le capot (14) comportant des premier (19) et deuxième (20) bords opposés entre lesquels s'étendent des troisième (21) et quatrième (22) bords, ledit appareil comprenant :
un premier ensemble de verrou (26) fixé au capot (14) et comportant un premier verrou (32) qui est mobile le long du premier bord (19) de façon à venir en prise avec le boîtier (12) et à quitter sa prise avec celui-ci, et un premier élément de sollicitation (40) agencé de façon à solliciter le premier verrou (32) en prise avec le boîtier (12) ; et
un deuxième ensemble de verrou (28) fixé au capot (14) et comportant un deuxième verrou (32) qui est mobile le long du deuxième bord (20) de façon à venir en prise avec le boîtier (12) et à quitter sa prise avec celui-ci, et un deuxième élément de sollicitation (40) agencé de façon à solliciter le deuxième verrou (32) en prise avec le boîtier (12).

2. Appareil selon la revendication 1, comprenant de plus un premier capuchon (30) fixé au capot (14), et renfermant partiellement le premier ensemble de verrou (26) ; et un deuxième capuchon (30) fixé au capot (14), et renfermant partiellement le deuxième ensemble de verrou (28) ; dans lequel, de préférence, le premier élément de sollicitation (40) comprend un premier ressort sollicitant le premier verrou (32) vers l'extérieur à partir du premier capuchon (30) ; et le deuxième élément de sollicitation (40) comprend un deuxième ressort sollicitant le deuxième verrou (32) vers l'extérieur à partir du deuxième capuchon (30).

3. Appareil selon la revendication 1, dans lequel chacun des premier et deuxième verrous (32) comporte une patte (44) faisant saillie à partir de celui-ci de façon à venir en prise avec un loquet respectif (50) sur le boîtier (12), et, de préférence, dans lequel la patte (44) de chacun des premier et deuxième verrous (32) fait saillie vers le troisième bord (21).

4. Appareil selon la revendication 1, dans lequel chacun des premier et deuxième verrous (32) comprend une partie centrale (34) ; une patte (44) faisant saillie à partir de la partie centrale (34) de façon à venir en prise avec un loquet (50) sur le boîtier (12) ; et un actionneur d'utilisateur (42) faisant saillie à partir de la partie centrale (34) vers le premier (19) ou le deuxième (20) bord le long duquel peut se déplacer le verrou respectif (32).

5. Appareil selon la revendication 1, dans lequel chacun des premier et deuxième verrous (32) comprend :
une partie centrale en forme de U (34) comportant une paire de pattes mutuellement espacées (33) avec une patte transversale (37) s'étendant entre celles-ci ;
une broche de guidage (35) faisant saillie à partir de la broche transversale (37) et entre la paire de pattes mutuellement espacées (33) ; et
une patte (44) faisant saillie à partir de la patte transversale (37) de façon à venir en prise avec un loquet respectif (50) sur le boîtier (12).

6. Appareil selon la revendication 5, dans lequel chacun des premier et deuxième éléments de sollicitation (40) comprend un ressort de compression à travers lequel s'étend la broche de guidage (35) du verrou respectif parmi les premier et deuxième verrous (32), et, de préférence, dans lequel chacun des premier (26) et deuxième (28) ensembles de verrou comprend de plus un bloc d'arrêt (36) butant contre le ressort de compression respectif (40) et un capuchon (30) fixé au capot (14) et ayant le bloc d'arrêt (36) qui est fixé sur celui-ci.

7. Appareil selon la revendication 1, dans lequel chacun des premier et deuxième verrous (32) comprend un actionneur d'utilisateur (42) accessible à partir de l'extérieur du dispositif électronique portable (10) pour faire quitter aux verrous (32) leur prise avec le boîtier (12).

8. Appareil selon la revendication 7, dans lequel le boîtier (12) comporte des premier et deuxième loquets (50), et, de préférence, dans lequel les verrous (32) peuvent coulisser, ou chaque élément de sollicitation (40) est agencé de façon à solliciter le verrou respectif (32) en prise avec un loquet respectif (50).

9. Appareil selon la revendication 1, comprenant de plus une patte fixe (16 à 18) fixée au capot (14) de façon à venir en prise avec un réceptacle sur le boîtier (12).

10. Appareil selon la revendication 9, dans lequel ladite patte fixe (16 à 18) fait saillie vers l'extérieur à partir du quatrième bord (22) du capot (14).

11. Appareil selon la revendication 9, comprenant de plus un contact électrique sollicité par ressort (54) sur le boîtier (12), et venant en prise avec le capot (14), qui est fixé au boîtier (12).
